# EUROPÄISCHE PATENTSCHRIFT

(11) **EP 4 374 985 B1**
(45) Veröffentlichungstag und Bekanntmachung des Hinweises auf die Patenterteilung: **24.12.2025**
(21) Anmeldenummer: 24169125.2
(22) Anmeldetag: 04.06.2019
(51) Int. Cl.: B25B 23/10, B21J 15/02, B21J 15/28

(54) **SETZEINRICHTUNG**
SETTING DEVICE
DISPOSITIF DE POSE

(30) Priorität: 11.06.2018 DE 102018113868
(43) Veröffentlichungstag der Anmeldung: 29.05.2024
(62) Teilanmeldung aus: 19178114.5
(73) Patentinhaber: Profil Verbindungstechnik GmbH & Co. KG, 61381 Friedrichsdorf (DE)
(72) Erfinder: LEBEAU, Andreas, 61381 Friedrichsdorf (DE)
(74) Vertreter: Manitz Finsterwald Patent- und Rechtsanwaltspartnerschaft mbB

(56) Entgegenhaltungen:
- WO-A1-94/15736

## Beschreibung

Die vorliegende Erfindung betrifft eine Setzeinrichtung zur Befestigung eines Elements an einem Werkstück.

Bei der Massenherstellung von Werkstücken werden häufig Setzeinrichtungen verwendet, um an diesen Elemente zu befestigen, die bestimmte Funktionen bereitstellen. Solche Elemente können zum Beispiel Mutter- oder Bolzenelemente sein, die als Befestigungspunkte für weitere Komponenten dienen. Beispielsweise kommen derartige Elemente zum Einsatz, wenn es darum geht, Befestigungselemente an Blechteilen anzubringen. Ein typischer Anwendungsbereich solcher Sitzeinrichtungen ist der Automobilbau. Aber auch in anderen Bereichen finden Sitzeinrichtungen breite Anwendung.

Die WO 94/15736 A1 offenbart eine Befestigungsmaschine nach dem Oberbegriff von Anspruch 1 mit einem Nietzuführungskanal, in welchem ein Nietkopf mit federbelasteten Kugeln in Eingriff gebracht wird, um den Niet mit dem Nietzuführungskanal und einem Stempel auszurichten.

Die DE 32 36 547 A1 beschreibt einen Drehschrauber, der im Bereich eines Mundstücks eine Spannzange zum Halten von zugeführten Schrauben aufweist, wobei die Spannzange aus mehreren Spannbacken besteht, welche von einem 25 elastischen Ring umgeben sind.

Aus der DE 17 28 463 A1 ist ein automatischer Schrauber mit einem Mundstück bekannt, das zwei mittels eines elastischen Gummis verbundene Haltebacken aufweist, die ein Herausfallen einer Schraube in Förderrichtung verhindern.

In der US 2 845 968 A ist ebenfalls ein elektrisch betriebener Schrauber beschrieben, der im Bereich eines Mundstücks Mittel aufweist, die eine Schraube in Position halten, damit diese von einem Schraubwerkzeug kontaktiert werden kann und welche zugleich eine freie Drehung der Schraube ermöglichen.

Die DE 24 15 241 A1 offenbart eine Einrichtung zum pneumatischen Zuführen von Schrauben in ein Mundstück eines Schraubers, wobei das Mundstück für eine zentrische Fixierung zugeführter Schrauben Stahlkugeln aufweist, die von gummiartigen Flachringen umgrenzt werden.

Dabei ist es für die Qualität des Werkstücks von großer Bedeutung, dass das Element zuverlässig und in kontrollierter Weise an dem Werkstück fixiert wird. Mit anderen Worten muss das Element reproduzierbar zugeführt und gegen bzw. in das Werkstück gepresst werden. Die zur Fixierung des Elements erforderliche Presskraft wird durch einen Stempel aufgebracht. Um eine exakte Heranführung und Positionierung des Elements zu ermöglichen, ist die Setzeinrichtung mit einer Führungseinrichtung versehen, die das Element während dem Heranführen und Pressen sicher und lagegetreu führt. Zu diesem Zweck weist die Führungseinrichtung einen axialen Hohlraum auf, durch den das Element in einer Setzrichtung - also auf das Werkstück zu - mittels des axial bewegbaren Stempels geführt wird. Die Führungseinrichtung weist zumindest zwei Führungselemente auf, die den Hohlraum definieren oder in radialer Richtung begrenzen. Die Führungselemente sind mittels einer Vorspanneinrichtung, die eine auf zumindest eines der Führungselemente nach radial innen - also auf eine Längsachse des Hohlraums zu - wirkende Vorspannkraft erzeugt, vorgespannt. Diese Vorspannung sorgt dafür, dass das Element ohne seitliches Spiel durch den Hohlraum geführt werden kann, was die Gefahr eines Verkantens des Elements minimiert. Die zumindest zwei Führungselemente sind zumindest abschnittsweise relativ zueinander bewegbar. Bevorzugt sind sie separat ausgebildet. In bestimmten Fällen ist es jedoch auch möglich, die Führungselemente einstückig miteinander auszubilden, wobei eine (elastische) Verbiegbarkeit der Elemente relativ zueinander zugelassen wird. Man denke in diesem Zusammenhang beispielsweise an zwei Halbschalen, die an einer ihrer jeweiligen Längsseiten miteinander (z.B. einstückig) verbunden sind und so eine Art Klammer oder Ring mit Schlitz bilden. Es ist auch möglich, einen Abschnitt einer die Führungseinrichtung aufnehmenden Komponente der Setzeinrichtung als Führungselement zu nutzen und zumindest ein zweites, in radialer Richtung nach innen vorgespanntes Führungselement vorzusehen. Beispielsweise drückt das vorgespannte Führungselement das zu setzende Befestigungselement bei seiner Bewegung durch den Hohlraum gegen einen Abschnitt einer Innenfläche eines Gehäusebauteils, dass die Führungseinrichtung aufnimmt.

Derartige Setzeinrichtungen sind grundsätzlich bekannt. Es können jedoch Fehlfunktionen auftreten, etwa wenn das Element nicht korrekt zugeführt wird. Derartige Fehlfunktionen führen zu mangelhaften Werkstücken und/oder Produktionsausfällen, die mit erheblichen Kosten verbunden sind. Eine zuverlässige Ausgestaltung der Setzeinrichtungen ist daher von großer Bedeutung. Solche Setzeinrichtungen sind jedoch aufwendig und teuer.

Es ist eine Aufgabe der vorliegenden Erfindung, eine kostengünstigere und konstruktiv einfachere Setzeinrichtung der eingangs genannten Art zu schaffen, die gleichzeitig zuverlässig betreibbar ist und gute Ergebnisse liefert.

Die Lösung dieser Aufgabe erfolgt durch eine Setzeinrichtung mit den Merkmalen des Anspruchs 1.

Erfindungsgemäß umfasst die Vorspanneinrichtung zumindest ein die Vorspannkraft erzeugendes elastisches Vorspannelement, das zumindest teilweise aus einem Elastomer gefertigt ist. Ein solches Vorspannelement ist kostengünstig herstellbar und stellt die erforderliche Vorspannkraft zuverlässig und reproduzierbar bereit.

Das Vorspannelement ein in Umfangsrichtung geschlossenes, ringförmiges Element, das die Führungselemente an ihrer radialen Außenseite in Umfangsrichtung umgibt. Es kann grundsätzlich eine beliebige Umfangs- und/oder Querschnittsgeometrie aufweisen, z.B. eine rechteckige, quadratische, kreisrunde oder ovale Umfangs- und/oder Querschnittsgeometrie.

Das Vorspannelement kann einen Anlageabschnitt aufweisen, der an der Führungseinrichtung angeordnet, insbesondere befestigt oder angeformt ist und der in zumindest einem Abschnitt der Führungseinrichtung in radialer Richtung über einer Außenkontur der Führungselemente hinausragt. Alternativ oder zusätzlich kann der Anlageabschnitt an einer die Führungseinrichtung zumindest teilweise aufnehmenden Komponente der Setzeinrichtung, insbesondere an einem Gehäuseabschnitt, angeordnet, insbesondere befestigt oder angeformt sein, wobei der Anlageabschnitt nach radial innen ragt. Eine weitere Ausführungsform, die mit den vorstehend beschriebenen Ausführungsformen ebenfalls kombinierbar ist, sieht vor, dass das Vorspannelement ein separates Bauteil mit einem Anlageabschnitt ist, der in radialer Richtung zwischen der Führungseinrichtung und einer die Führungseinrichtung zumindest teilweise aufnehmenden Komponente der Setzeinrichtung, insbesondere einem Gehäuseabschnitt, angeordnet ist.

Ein derartiger Anlageabschnitt bildet zumindest einen Abstützpunkt zur radialen Abstützung der Führungsrichtung. Er kann auch an einem die Führungselemente in Umfangsrichtung umgebenden Vorspannelement vorgesehen sein oder durch dieses selbst gebildet sein oder - wie erwähnt - eine eigenständige Funktionskomponente sein.

Insbesondere ist der Anlageabschnitt an einer radialen Außenseite eines der Führungselemente angeordnet.

Es können mehrere Anlageabschnitte vorgesehen sein, die in Umfangsrichtung der Führungseinrichtung und/oder in Umfangsrichtung einer die Führungseinrichtung zumindest teilweise aufnehmenden Komponente der Setzeinrichtung verteilt, insbesondere symmetrisch verteilt angeordnet sind. Dies ermöglicht eine gleichmäßige Abstützung der Führungseinrichtung und ist herstellungstechnisch einfach umsetzbar. Die die Anlageabschnitte können separat voneinander ausgebildet sein.

Erfindungsgemäß sind in Umfangsrichtung benachbarte Führungselemente durch zumindest eine Unterbrechung voneinander getrennt, beispielsweise durch einen Schlitz.

Die Führungselemente sind voneinander elektrisch isoliert. Dies ist insbesondere dann von Vorteil, wenn die Führungselemente (oder Teile davon) selbst als elektrische Kontakte wirken. In der Unterbrechung ist jeweils zumindest ein Isolierelement angeordnet, insbesondere wobei das Isolierelement ein elektrisch isolierendes und/oder elastisches Material umfasst oder vollständig daraus gefertigt ist. Das Isolierelement kann die Unterbrechung im Wesentlichen vollständig ausfüllen. Ein teilweises Ausfüllen ist in vielen Fällen jedoch ausreichend. Bevorzugt umfasst das Isolierelement einen Elastomer oder ist vollständig aus einem Elastomer gebildet. Es kann einen kreisförmigen, ovalen, trapezartigen oder keilförmigen Querschnitt aufweisen. Die Geometrie des Isolierelements kann in Längsrichtung des Isolierelements im Wesentlichen konstant sein. Ein in Längsrichtung variierende Geometrie ist jedoch auch denkbar.

Auch die Geometrie des Vorspannelements kann an die jeweils vorliegenden Bedürfnisse angepasst sein. Erfindungsgemäß ist sie in Umfangsrichtung des Vorspannelements im Wesentlichen konstant.

Das Vorspannelement und/oder das Isolierelement können einen vulkanisierten elastomeren Kunststoff umfassen oder vollständig daraus gebildet sein.

Das Vorspannelement und das Isolierelement sind einstückig ausgebildet. Grundsätzlich können sie aber auch separat gefertigt sein (nicht erfindungsgemäß). Sowohl das Vorspannelement als auch das Isolierelement können mehrstückige Bauteile sein.

Gemäß einer Ausführungsform sind das Vorspannelement und/oder das Isolierelement zumindest teilweise an die Führungseinrichtung, insbesondere an zumindest eines der Führungselemente angeformt.

Nachfolgend wird die vorliegende Erfindung rein beispielhaft anhand vorteilhafter Ausführungsformen unter Bezugnahme auf die beigefügten Zeichnungen erläutert. Es zeigen:
- Fig. 1: eine Setzeinrichtung in einer perspektivischen Ansicht,
- Fig. 2 bis 6: einen Querschnitt durch die Setzeinrichtung gemäß Fig. 1 in verschiedenen Betriebszuständen,
- Fig. 7: einen Querschnitt durch die Setzeinrichtung gemäß Fig. 1 bei einer Fehlfunktion,
- Fig. 8: einen Querschnitt durch eine Fußplatte der Setzeinrichtung mit einem Beispiel einer Führungseinrichtung,
- Fig. 9: die Komponenten der Führungseinrichtung gemäß Fig. 8 in einer Explosionsdarstellung,
- Fig. 10A bis 10D: eine erfindungsgemäße Ausführungsform der Führungseinrichtung in einer Perspektivansicht, einem Querschnitt bzw. zwei Längsschnitten,
- Fig. 11: einem weiteren Beispiel der Führungseinrichtung in einer Perspektivansicht,
- Fig. 12: eine Ausführungsform der Fußplatte in einer Perspektivansicht,
- Fig. 13: einen Querschnitt durch die Fußplatte gemäß Fig. 12,
- Fig. 14A bis 14D: einem weiteren Beispiel der Führungseinrichtung in einer Perspektivansicht, einem Querschnitt bzw. zwei Längsschnitten,
- Fig. 15A bis 15D: einem weiteren Beispiel der Führungseinrichtung in einer Perspektivansicht, einem Querschnitt bzw. zwei Längsschnitten,
- Fig. 16 bis 18: weitere Ausführungsformen der Führungseinrichtung,
- Fig. 19: eine Ausführungsform des Führungselements und
- Fig. 20 bis 22: weitere Ausführungsformen der Führungseinrichtung.

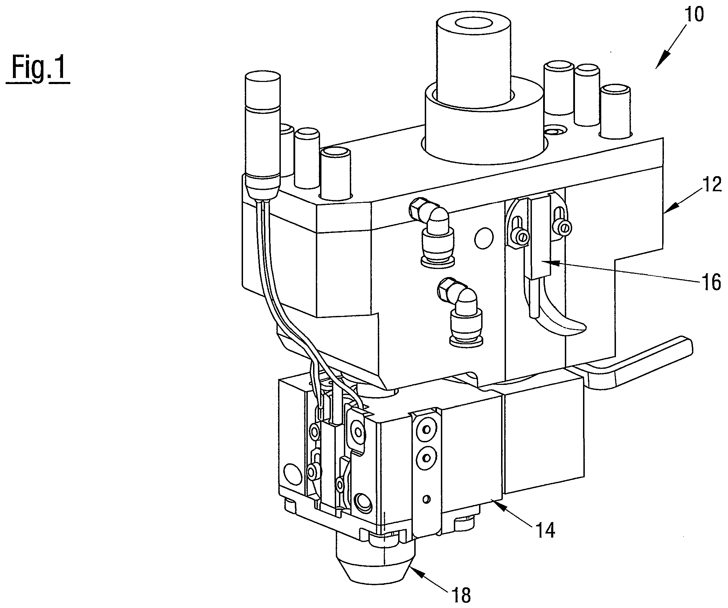

Fig. 1 zeigt eine Setzeinrichtung 10 in einer perspektivischen Ansicht. Diese umfasst ein Führungsgehäuse 12 sowie eine Führungsplatte 14. Die Setzeinrichtung 10 verfügt über einen Sensor 16, mit dem überwacht werden kann, ob sich die Setzeinrichtung 10 in einem geschlossenen oder in einem geöffneten Zustand befindet. An der Führungsplatte 14 ist eine Fußplatte 18 angeordnet, die mit einem Werkstück in Kontakt bringbar ist, um an diesem ein Befestigungselement zu befestigen.

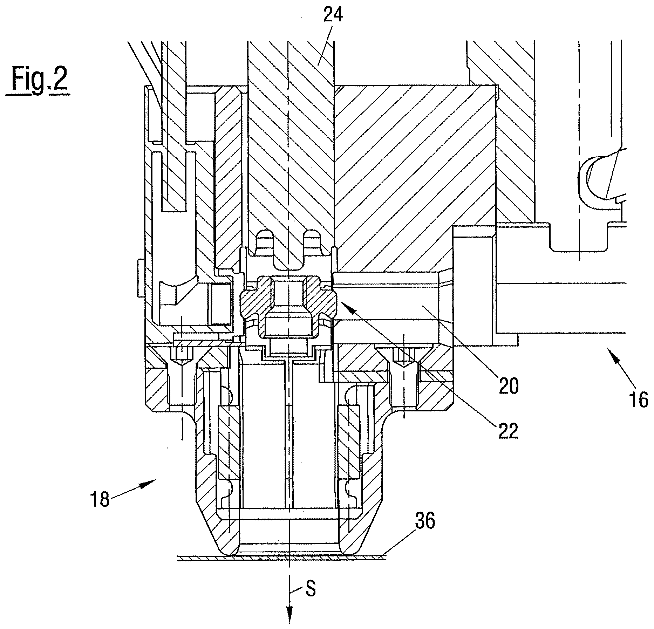

Fig. 2 zeigt einen Querschnitt durch einen Teil der Führungsplatte 14 sowie durch die Fußplatte 18. Die Führungsplatte 14 weist einen Zufuhrkanal 20 auf, durch den das an dem Werkstück zu befestigende Befestigungselement 22 in eine Position gebracht werden kann, von der es durch einen in einer Setzrichtung S bewegbaren Stempel oder Stößel 24 zu dem Werkstück hin und in dieses hinein gepresst werden kann. In Fig. 2 ist eine Ausgangssituation/-position gezeigt, in der das Element 22 mittels Haltefinger geklemmt ist. Die Setzeinrichtung 10 ist geöffnet und das Element 22 kann verarbeitet werden. Die Fußplatte 18 wurde bereits in Anlage mit einer Oberfläche eines Werkstücks 36 gebracht, an dem das Element 22 befestigt werden soll. Es versteht sich, dass das beispielhaft als Blechteil dargestellte Werkstück 36 auch anders ausgestaltet sein kann. Gleiches gilt für das Element 22.

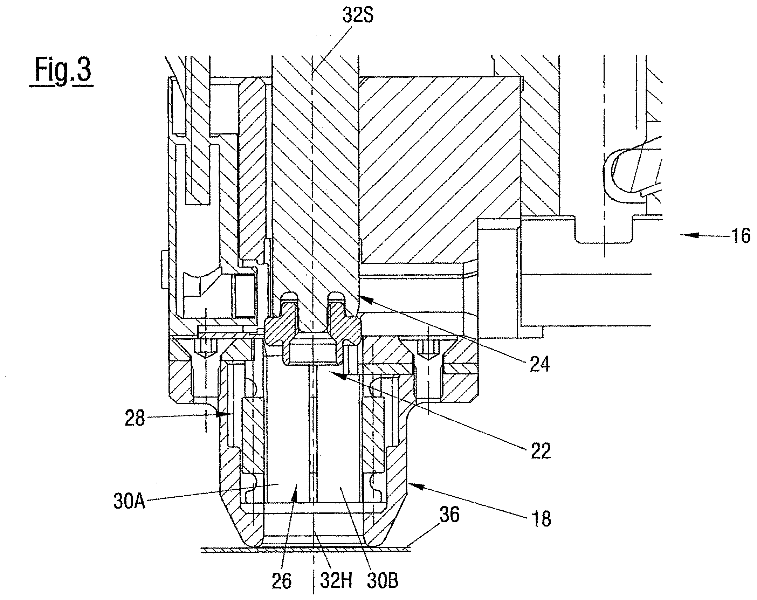

In Fig. 3 wird das Element 22 aus der Ausgangssituation kommend durch den Stempel 24 in einen kanalartigen axialen Hohlraum 26 einer Führungseinrichtung 28 der Fußplatte 18 gedrückt. Die Haltefinger werden dabei zurückgedrückt.

Die Führungseinrichtung 28 umfasst eine Mehrzahl von Führungssegmenten 30A, 30B. Die Segmente 30A, 30B sind durch einen Schlitz 39 voneinander getrennte, separate Bauteile, die jeweils einen kreissegmentartigen Querschnitt aufweisen und derart angeordnet sind, dass sie den Hohlraum 26 in Umfangsrichtung begrenzen. Sie sind durch eine nicht im Detail gezeigte Vorspanneinrichtung in einer Richtung zu einer Längsachse 32H des Hohlraums 26, die koaxial mit einer Längsachse 32S des Stempels 24 angeordnet ist, hin vorgespannt, also nach radial innen. Sobald das Element 22 in den Hohlraum 26 eintritt, werden die Segmente 30A, 30B gegen die durch die Vorspanneinrichtung erzeugte Vorspannkraft nach außen gedrückt.

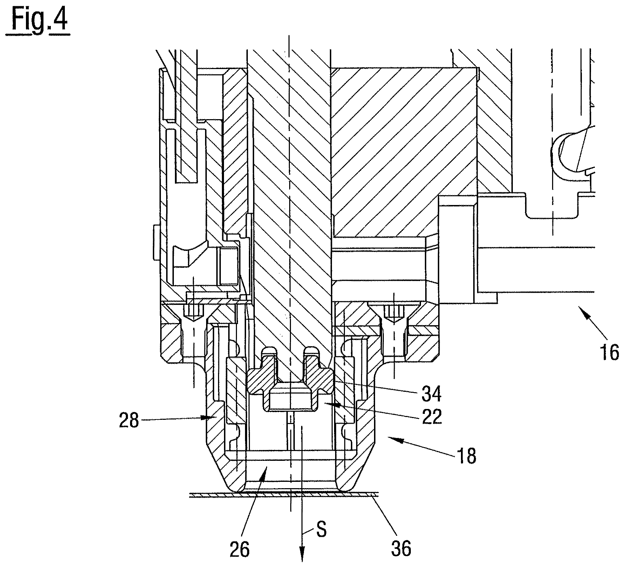

Fig. 4 zeigt, wie das Element 22 durch den Hohlraum 26 der Führungseinrichtung 28 geschoben wird. Dabei wirkt eine Umfangsfläche 34 des Elements 22 mit den Segmenten 30A, 30B zusammen. Durch die Vorspannkraft wird eine zuverlässige Führung des Elements 22 sichergestellt, da die Gefahr eines Verkippens oder Verkantens des Elements 22 minimiert wird.

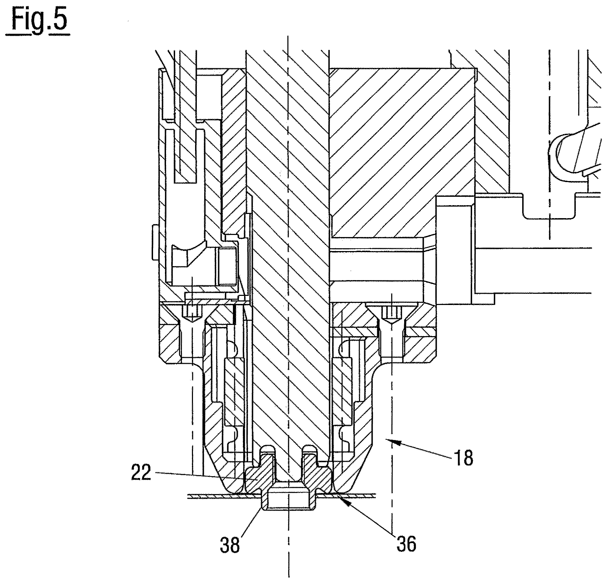

Fig. 5 zeigt, wie das Element 22 in das nur angedeutete Werkstück 36 eingepresst wird. Das Element 22 ist ein selbststanzendes Element. Der Einfachheit halber ist ein Umformen eines Nietabschnitts 38 des Elements 22 nicht gezeigt, dass durch die Wirkung einer nicht gezeigten Matrize bewirkt werden kann. Beispielsweise hintergreift der umgeformte Nietabschnitt 38 das Werkstück 38 an dessen Rückseite. Ein nicht gezeigter Stanzbutzen wurde entfernt. Der Vollständigkeit halber wird darauf hingewiesen, dass die Setzeinrichtung 10 grundsätzlich auch bei nichtselbststanzenden Elementen 22 zum Einsatz gelangen kann. Das Werkstück 36 ist dann in geeigneter Weise vorgelocht.

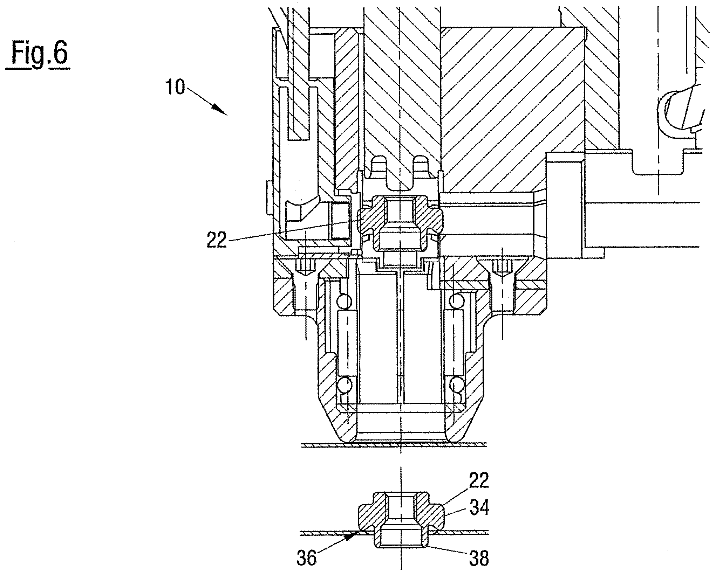

Fig. 6 zeigt den "Normalfall": Nach dem Befestigen des Elements 22 an dem Werkstück 36 wird die Setzeinrichtung 10 von diesem entfernt und in eine neue Setzposition gebracht. Dies kann durch eine Bewegung der Setzeinrichtung 10 oder eine Bewegung des Werkstücks 36 erfolgen. Es können auch sowohl die Setzeinrichtung 10 als auch das Werkstück 36 bewegt werden bzw. ein neues Werkstück 36 herangeführt werden. Ein neues Element 22 wurde bereits in die Ausgangsposition gebracht, die auch in Fig. 2 bereits gezeigt wurde.

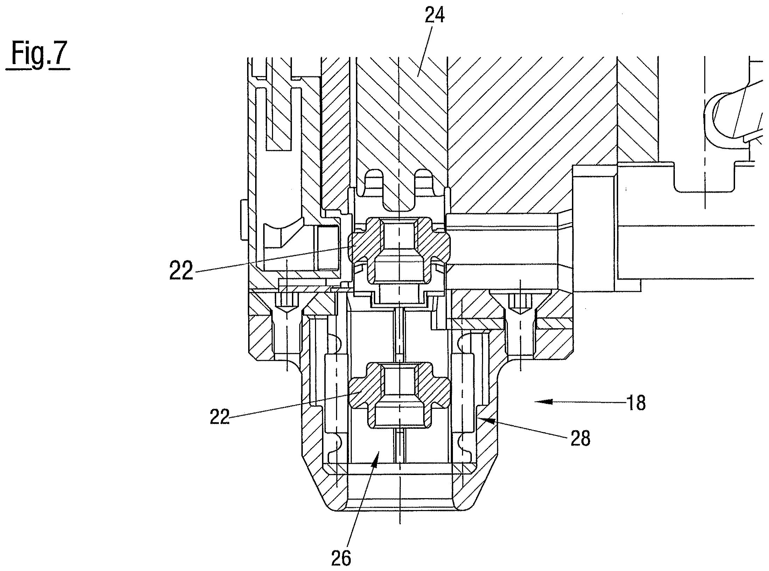

Fig. 7 zeigt eine Fehlfunktion der Setzeinrichtung 10. Das erste Element 22 befindet sich noch im Bereich der Führungseinrichtung 28, beispielsweise weil es sich dort verkantet hat, und blockiert den zur Führung des Elements 22 vorgesehenen Hohlraum 26. Das zweite, bereits in die Ausgangsposition gebrachte Element 22 würde nun durch den Stempel 24 gegen das erste Element 22 gedrückt werden, was mit großer Wahrscheinlichkeit eine Beschädigung der Setzeinrichtung 10, insbesondere der Führungseinrichtung 28, zur Folge hätte.

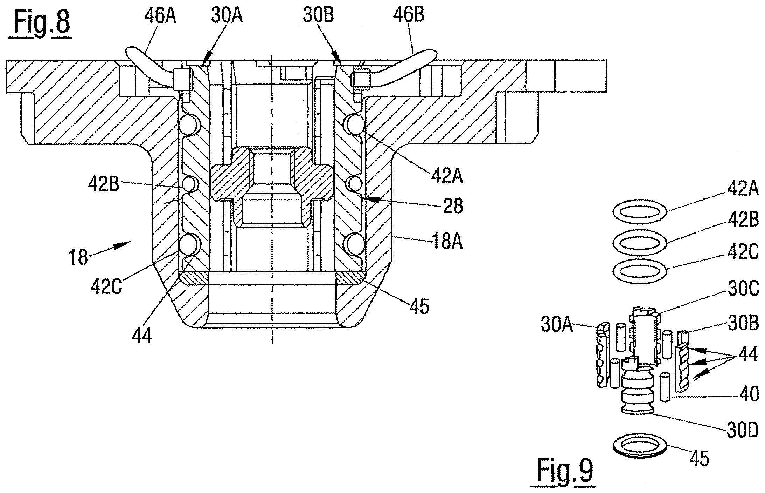

Um diese Fehlfunktion zu erkennen, ist eine Detektionseinrichtung vorgesehen, mittels derer die Anwesenheit eines Elements 22 in dem Hohlraum 26 erfasst werden kann. Eine Ausführungsform einer solchen Detektionseinrichtung ist in Fig. 8 gezeigt. Sie ist in die Führungseinrichtung 28 integriert, deren Komponenten in Fig. 9 in einer Explosionsdarstellung gezeigt sind.

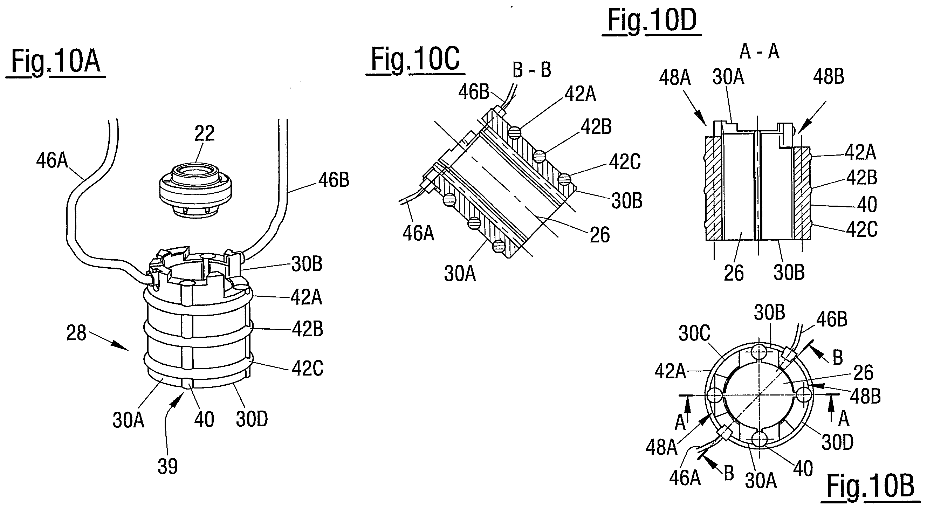

Die Führungseinrichtung 28 umfasst vier Führungssegmente 30A, 30B, 30C, 30D (bevorzugt aus Metall), die jeweils einen Umfangsabschnitt des Hohlraums 26 bilden. Sie sind voneinander durch Isolierstifte 40 getrennt, die in zwischen benachbarten Führungssegmenten 30A, 30B, 30C, 30D vorgesehenen Schlitzen 39 angeordnet sind (siehe z.B. Fig. 3, 10A, 10B). Die Isolierstifte 40 können aus einem Elastomer bestehen. Sie isolieren benachbarte Segmente 30A, 30B, 30C, 30D elektrisch und ermöglichen aufgrund ihrer elastischen Eigenschaften eine Relativbewegung der Segmente 30A, 30B, 30C, 30D. Um die eingangs beschriebene Vorspannung der Segmente 30A, 30B, 30C, 30D zu erzeugen, sind elastische Ringe 42A, 42B, 42C (z.B. O-Ringe) vorgesehen. Sie liegen in entsprechend dimensionierten Nuten 44. Durch die Ringe 42A, 42B, 42C werden die Segmente 30A, 30B, 30C, 30D nach radial innen gegen die elastischen Isolierstifte 40 vorgespannt. Durch ein Einbringen eines Elements 22 in den Hohlraum 26 werden die Ringe 42A, 42B, 42C gedehnt. Letztlich wird dadurch eine in radialer Richtung auf das Element 22 wirkende Kraft erzeugt, die Lage des Elements 22 stabilisiert.

Wie in Fig. 8 zu sehen ist, sind die elektrisch leitfähigen Segmente 30A und 30B mit elektrischen Leitern 46A, 46B verbunden. Diese erlauben es, mittels einer Steuereinrichtung zwischen den Elementen 30A, 30B eine Spannung anzulegen. Wenn das Element 22 elektrisch leitend ist, schließt es die Segmente 30A, 30B kurz, sobald es in den Hohlraum 26 eintritt, so dass ein Strom fließen kann, was von der der Steuereinrichtung erfasst wird. Grundsätzlich ist es auch möglich, die Anwesenheit des Elements 22 in analoger Weise über eine Widerstandsmessung oder andere elektrische Parameter zu bestimmen.

Bei der in den Figuren 8 und 9 gezeigten Ausführungsform sind vier Segmente 30A, 30B, 30C, 30D vorgesehen, von denen zwei (30 A und 30 B) als elektrische Kontakte wirken. Es versteht sich, dass die Anzahl der vorgesehenen Führungssegmente und die Art der Kontaktierung (z.B. Kontakt-Paarung) bedarfsgerecht gewählt werden kann. Ferner ist es möglich, nicht einzelne Führungssegmente selbst als elektrische Kontakte zu verwenden, sondern nur Abschnitte eines der Segmente bzw. mehrere Segmente mit elektrischen Kontakten zu versehen.

Eine axiale Abstützung der Führungseinrichtung 28 bzw. der Segmente 30A, 30B, 30C, 30D in einem Gehäuse 18A der Platte 18 erfolgt über einen elektrisch isolierenden Stützring 45. Eine radiale Abstützung kann über die Ringe 42A, 42C erfolgen, da diese zum Teil aus den Nuten 44 hinausragen und damit in radialer Richtung über die Segmente 30A, 30B, 30C, 30D überstehen.

Die Figuren 10A bis 10D zeigen eine weitere Ausführungsform der Führungseinrichtung 28, wobei Fig. 10A eine Perspektivansicht ist und die Fig. 10B bis 10D Quer- bzw. Längsschnitte sind. Die Ringe 42A, 42B, 42C und die Isolierstifte 40 sind einstückig ausgebildet. Sie können auch lediglich miteinander verbunden sein oder separate Bauteile sein (nicht erfindungsgemäß). Gemäß einer besonders einfachen Ausführungsform werden die vorstehend genannten Komponenten an die Segmente 30A, 30B, 30C, 30D angeformt. Bevorzugte Materialien, aus dem die genannten Komponenten geformt werden können, sind elastisch verformbare Kunststoffe, insbesondere Elastomere. Beispielsweise werden diese durch Vulkanisieren eines thermoplastischen Naturkautschuks oder eines Synthesekautschuks erhalten.

Insbesondere den Fig. 10A und 10D ist zu entnehmen, dass die Segmente 30A, 30B, 30C, 30D an ihren jeweiligen Oberseiten mit Ausnehmungen 48A oder 48B versehen sind, die eine axiale Fixierung der Segmente 30A, 30B, 30C, 30D ermöglichen, was nachfolgend noch näher erläutert wird.

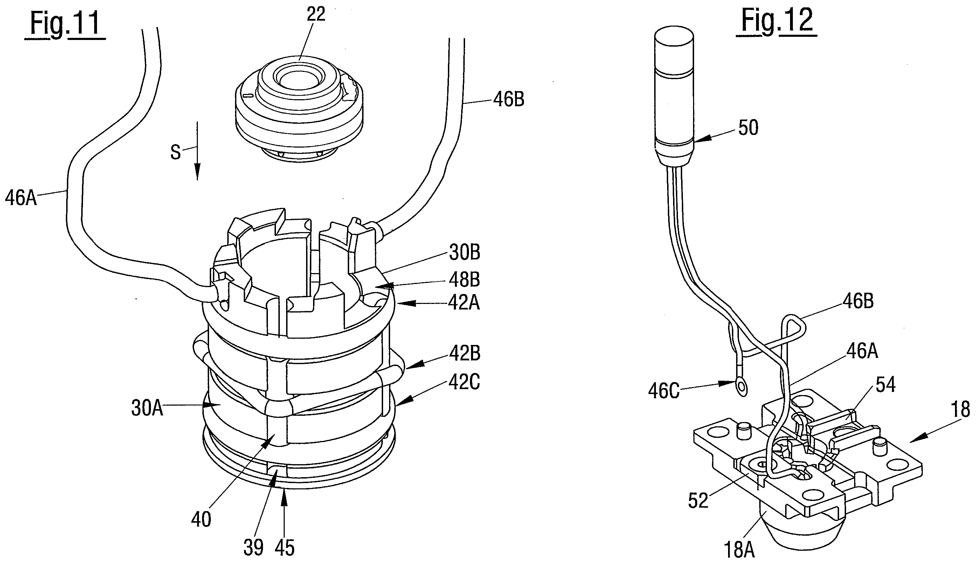

Fig. 11 zeigt eine alternative Ausführungsform der Führungseinrichtung 28. Hier sind Isolierstifte 40 vorgesehen, die sich zwischen den die Ringen 42A, 42C in axialer Richtung erstrecken, nicht aber in axialer Richtung über diese hinaus ragen. Die Schlitze 39 sind also nur teilweise ausgefüllt. Anders als dargestellt können diese Komponenten einstückig ausgebildet sein. Der in axialer Richtung zwischen den Ringen 42A, 42C liegende Ring 42B weist eine im Wesentlichen quadratische Grundform auf und umgreift die Isolierstifte 40 von außen, um eine zusätzliche Vorspannung zu erzeugen.

Fig. 12 zeigt die Führungseinrichtung 28 der Fig. 11 in einem in der Fußplatte 18 montierten Zustand. Die Leiter 46A, 46B sind über einen mehrpoligen Stecker 50 mit einer nicht näher dargestellten Steuereinrichtung verbunden. Über den Stecker 50 wird auch eine elektrische Verbindung zu der Führungsplatte 14 hergestellt (siehe Leiter 46C). Von oben werden die Segmente 30A, 30B, 30C, 30D durch ein Fixierelement 52 und eine Zufuhrschiene 54 in dem Gehäuse 18A der Fußplatte 18 fixiert. Die Zufuhrschiene 54 bildet einen Teil des Kanals 20 (siehe Fig. 2).

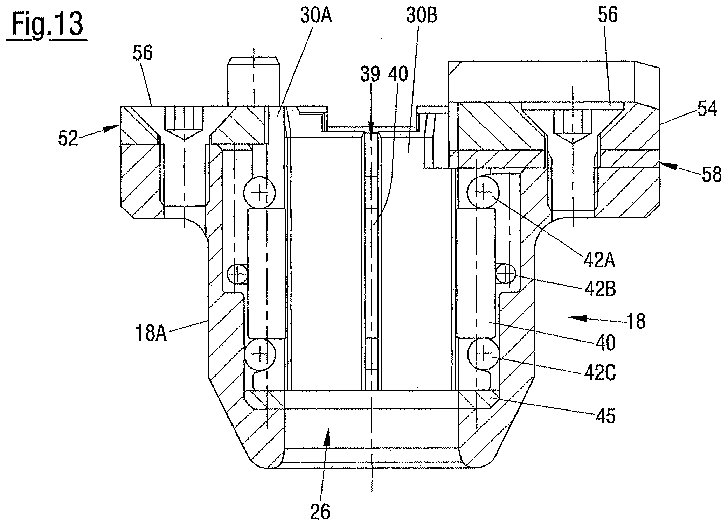

Fig. 13 zeigt die Fußplatte 18 in einer Schnittansicht. Zu erkennen ist die axiale Fixierung der Führungseinrichtung 28 durch das Fixierelement 52 und die Zufuhrschiene 54. Das Fixierelement 52 ist aus isolierendem Material gefertigt und kann daher in direktem Kontakt mit dem Segment 30A stehen. Es ist mit dem Gehäuse 18A mittels einer Schraube 56 verschraubt. Die Zufuhrschiene 54, die bei dem Heranführen des Elements 22 in die Ausgangsposition eine Rolle spielt, ist dahingegen mittels einer Isolierplatte 58 gegenüber dem Segment 30B isoliert. Das Fixierelement 52 und die Zufuhrschiene 54 greifen in die Ausnehmungen 48A bzw. 48B ein. Die Komponenten 52, 54 können aus Kunststoff sein.

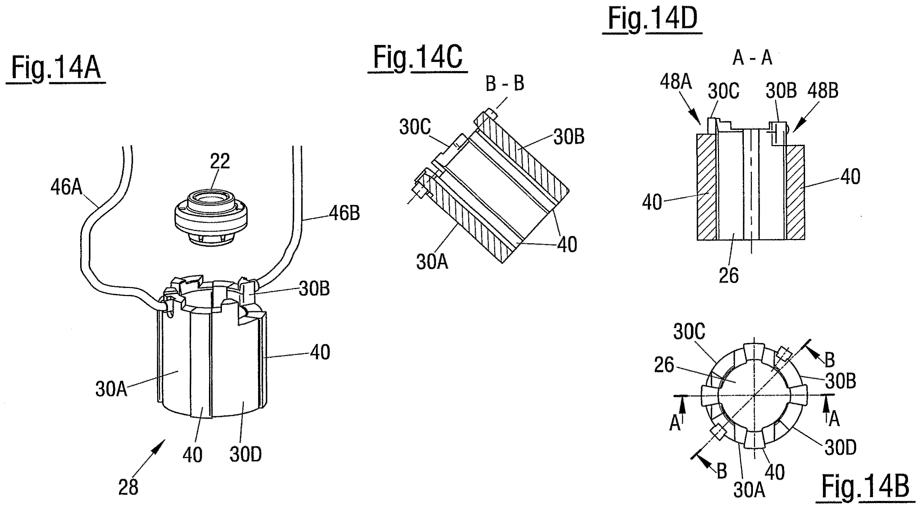

Die Figuren 14A bis 14D zeigen eine weitere Ausführungsform der Führungseinrichtung 28, wobei Fig. 14A eine Perspektivansicht ist und die Fig. 14B bis 14D Quer- bzw. Längsschnitte sind. Anstelle der Isolierstifte 40 der Ausführungsformen gemäß den Fig. 8, 9 und 10A bis 10D mit im Wesentlichen kreisrundem Querschnitt sind in den Schlitzen 39 zwischen benachbarten Segmenten 30A, 30B, 30C, 30D Isolierstifte 40 mit in etwa trapezförmigem Querschnitt angeordnet. Die Isolierstifte 40 ragen in radialer Richtung außen über die Segmente 30A, 30B, 30C, 30D hinaus, so dass sie eine Abstützung der Führungseinrichtung 28 in dem Gehäuse 18 A ermöglichen. Mit anderen Worten dienen die Isolierstifte 40 nicht nur zur elektrischen Isolierung der Segmente 30A, 30B, 30C, 30D gegeneinander, sondern sie dienen auch zu deren radialen Abstützung. Die elastischen Eigenschaften der Isolierstifte 40 sorgen - bei geeigneter Dimensionierung des radialen Überstands - für die gewünschte Vorspannung auf die Segmente 30A, 30B, 30C, 30D. Die radialen Innenseiten der Isolierstifte 40 sind gegenüber den Innenseiten der Segmente 30A, 30B, 30C, 30D zurückversetzt, um die Bewegung des Elements 22 durch den Hohlraum 26 nicht zu behindern. Die Isolierstifte 40 können separate Bauteile sein oder an die Segmente 30A, 30B, 30C, 30D angeformt sein. Bevorzugt bestehen sie aus einem Elastomer.

Das Konzept, durch in radialer Richtung nach außen überstehende Elemente mit elastischen Eigenschaften eine Vorspanneinrichtung zu schaffen, lässt sich grundsätzlich auch losgelöst von den Isolierstifte 40 realisieren. Beispielsweise ist es - zusätzlich oder alternativ - möglich, an den Außenseiten der Segmente 30A, 30B, 30C, 30D elastische Anschlagabschnitte vorzusehen oder anzuformen, die sich in dem Gehäuse 18A abstützen. Umgekehrt können auch - zusätzlich oder alternativ - an dem Gehäuse 18A nach radial innen ragende elastische Anlageabschnitte vorgesehen sein, die zur radialen Abstützung der Führungseinrichtung 28 dienen. Die Anlageabschnitte können an der Führungseinrichtung 28 und/oder dem Gehäuse 18A befestigt oder an diese angeformt sein oder separate Bauteile sein.

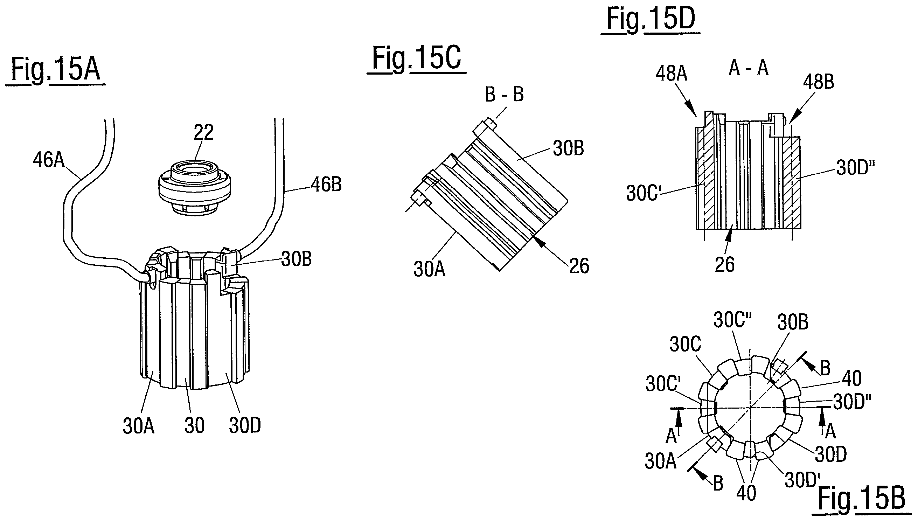

Die Figuren 15A bis 15D zeigen eine weitere Ausführungsform der Führungseinrichtung 28, wobei Fig. 15A eine Perspektivansicht ist und die Fig. 15B bis 15D Quer- bzw. Längsschnitte sind. Anstelle der Segmente 30A, 30B, 30C, 30D sind Segmente 30A, 30B, 30C, 30C', 30C", 30D, 30D', 30D" vorgesehen, zwischen denen jeweils in einem entsprechenden Schlitz 39 ein Isolierstift 40 angeordnet ist. Dies zeigt, dass grundsätzlich eine beliebige Anzahl von Führungssegmenten vorgesehen sein kann, um den jeweils vorliegenden Anforderungen bestmöglich Rechnung zu tragen. Gleiches gilt für die Anzahl und Ausgestaltung der Isolierstifte. Sie können die Unterbrechungen zwischen den Führungssegmenten vollständig oder auch nur teilweise ausfüllen und grundsätzlich eine beliebige, bedarfsgerechte Ausgestaltung (z.B. Querschnittsgeometrie) aufweisen.

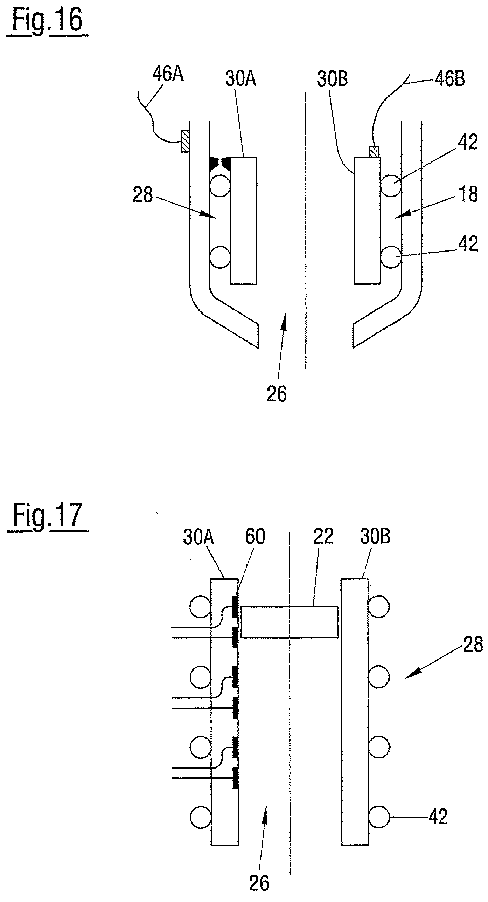

Fig. 16 zeigt eine Ausführungsform der Führungseinrichtung 28, bei der das Segment 30B (wie in den vorstehend beschriebenen Ausführungsformen) direkt mit einem Leiter 46B verbunden ist. Wird ein Element 22 in den Hohlraum 26 eingeführt, so drückt er die Segmente 30A, 30B gegen die durch die Ringe 42 erzeugte Vorspannung auseinander. Dadurch gelangt eine Kontaktstelle 59A, die an dem Segment 30A vorgesehen ist, mit einer Kontaktstelle 59B in Kontakt, die an dem Gehäuse 18A vorgesehen ist. Das Gehäuse 18A ist wiederum mit dem Leiter 46A verbunden. Auch in diesem Fall wird durch das Element 22 somit ein Stromkreis geschlossen, wobei aber eine durch einen Abstand der Kontaktstellen 59A, 59B in einem Grundzustand festgelegte minimale Relativbewegung der Segmente 30A, 30B hinzukommen muss, um letztlich das Schließen des Stromkreises zu bewirken.

Fig. 17 zeigt eine Detektionseinrichtung, bei der das Segment 30A eine Mehrzahl von Detektorelementen 60 - beispielsweise Kontaktflächen - aufweist, die jeweils paarweise miteinander in Verbindung stehen. Befindet sich das Element 22 in einer Position, in der die beiden Kontaktflächen 60 eines in Verbindung stehenden Paares mit ihm in Kontakt stehen, so wird wieder ein Stromkreis geschlossen, was eine Bestimmung der Position des Elements 22 in dem Hohlraum 26 ermöglicht. In Fig. 17 wird diese Situation beispielhaft anhand der Lage des Elements 22 verdeutlicht, durch das die beiden obersten Detektorelemente 60 kurzgeschlossen.

Anstelle der Kontaktflächen 60 können auch andere Sensoren und/oder Signalquellen vorgesehen sein, die auch nicht zwingend paarweise miteinander funktionell gekoppelt sein müssen. Beispielsweise können Schallquellen und Schallsensoren vorgesehen sein, die eine Reflexion von Schallwellen an dem Element 22 erfassen. Die Detektorelemente 60 können auch Bewegungs- oder Vibrationssensoren sein, um Veränderungen des Schwingungs-/Vibrationsmusters oder der Eigenschwingung der Führungseinrichtung 28 oder der Fußplatte 18 (die Elemente 60 - oder zumindest ein Element 60 - können dann auch innen oder außen an dem Gehäuse 18A angebracht sein) zu erfassen, die durch die Anwesenheit / Lage / Position eines Elements 22 in dem Hohlraum verursacht wird. Die Detektorelemente 60 können auch optische oder magnetische Sensoren oder Drucksensoren oder Sensoren anderen Typs sein (z.B. eingebettete Messspulen).

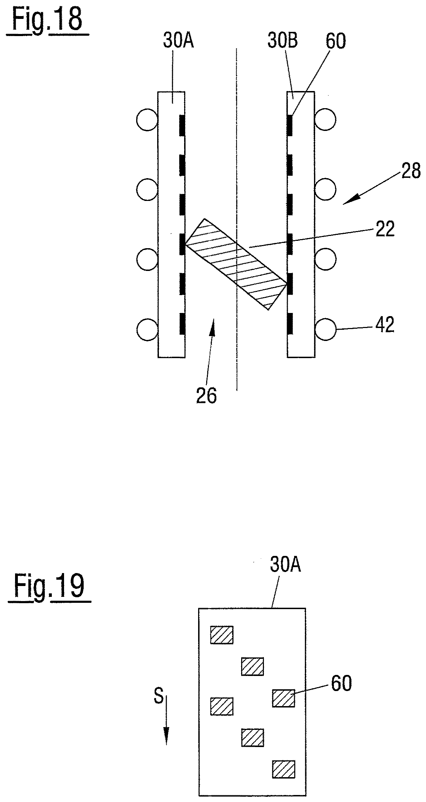

Fig. 18 zeigt eine weitere Ausführungsform der Führungseinrichtung 28. Hier sind sowohl an dem Segment 30A als auch an dem Segment 30B Detektorelemente 60 vorgesehen. Diese können beispielsweise derart miteinander gekoppelt sein, dass gegenüberliegende Detektorelemente 60 eine Paarung bilden, die zur Erzeugung eines Signals dienen (z.B. Kontaktflächen-Paar oder Sender-Empfänger-Paar). Es ist aber auch möglich, die einzelnen Elemente 60 einzeln oder in Gruppen anzusteuern und/oder zu überwachen, um ein genaueres Bild der Position des Elements 22 und/oder seiner Lage im Raum zu erhalten. In Fig. 18 wurde beispielhaft ein verkipptes Element 22 eingezeichnet, das aufgrund seiner Lage mit zwei nicht einander gegenüber liegenden Detektorelementen/Kontaktflächen 60 in Kontakt steht und so einen Stromkreis zwischen diesen Elementen 60 schließt, was von der Steuereinrichtung erkannt und als Fehlfunktion interpretiert wird.

Fig. 19 zeigt eine Draufsicht auf ein Führungssegment 30A mit mehreren Detektorelementen 60, die nicht nur in axialer Richtung (vgl. Setzrichtung S) sondern auch in Umfangsrichtung verteilt angeordnet sind.

Anhand der Fig. 17 bis 19 wird deutlich, dass eine Anzahl, Anordnung und funktionale Gruppierung von Detektorelementen 60 ganz nach Bedarf (insbesondere im Hinblick auf die gewünschte räumliche Auflösung der Elementdetektion) gewählt werden kann. Auch der Typ der eingesetzten Detektorelemente (u.a. elektrische Messung - z.B. Spannung, Strom, Widerstand -, Messung akustischer Signale, Messung von Vibrationen und/oder von Bewegungen und/oder Abständen, Messung optischer Signale, Messung mechanischer Parameter - z.B. Druck und/oder Spannung) ist grundsätzlich frei wählbar. Unterschiedliche Detektortypen können auch kombiniert werden, um eine für den jeweiligen Anwendungsfall geeignete Detektionseinrichtung zu schaffen.

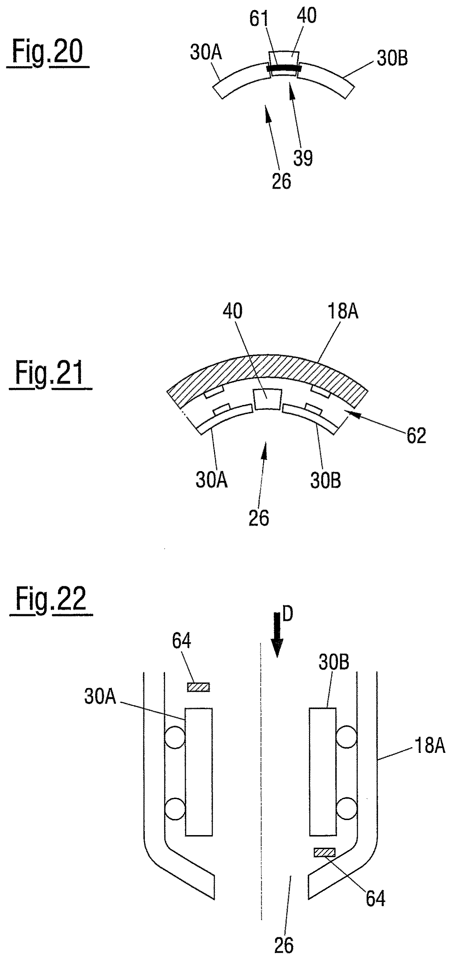

Fig. 20 zeigt eine Ausführungsform einer Detektionseinrichtung, die auf der Messung einer Abstandsänderung zwischen den Segmenten 30A, 30B basiert. Zu diesem Zweck ist ein als Messeinrichtung dienendes Verbindungselement 61 vorgesehen, dass den Schlitz 39 überbrückt und die beiden Segmente 30A, 30B miteinander verbindet. Dies kann beispielsweise ein elektrischer Leiter, dessen elektrischen Eigenschaften durch eine Längenänderung beeinflusst werden, bzw. ein Dehnungsmessstreifen sein.

Es ist auch möglich, zusätzlich oder alternativ eine Änderung des Abstands zwischen den Segmenten 30A, 30B und dem Gehäuse 18A zu erfassen und auszuwerten. Zu diesem Zweck sind beispielsweise Abstandssensoren 62 (z.B. kapazitive Sensoren) vorgesehen, die in Fig. 21 gezeigt sind. Zusätzlich oder alternativ zu den Abstandssensoren 62 können auch Dehnungsmessstreifen oder Piezo-Aufnehmer vorgesehen sein.

Fig. 22 zeigt eine Detektionseinrichtung, die auf der Messung eines Drucks im Bereich der Führungseinrichtung 28 basiert. Zu diesem Zweck wird Druckluft in den Hohlraum 26 eingebracht (siehe Pfeil D). An einer oder mehreren Stellen in dem Gehäuse 18A, insbesondere in oder benachbart zu dem Hohlraum 26, wird der sich einstellende Druck mittels entsprechender Drucksensoren 64 gemessen. Der sich an der einen Messstelle oder den mehreren Messstellen einstellende Druck hängt unter anderem davon ab, ob und gegebenenfalls wo sich ein Element 22 in dem Hohlraum 26 befindet.

### Bezugszeichenliste

- 10: Setzeinrichtung
- 12: Führungsgehäuse
- 14: Führungsplatte
- 16: Sensor
- 18: Fußplatte
- 20: Zufuhrkanal
- 22: Befestigungselement
- 24: Stößel oder Stempel
- 26: Hohlraum
- 28: Führungseinrichtung
- 30A, 30B, 30C, 30C', 30C", 30D, 30D', 30D": Führungssegment
- 32H,32S: Längsachse
- 34: Umfangsfläche
- 36: Werkstück
- 38: Nietabschnitt
- 39: Schlitz
- 40: Isolierstift
- 42, 42A, 42B, 42C: Ring
- 44: Nut
- 45: Stützring
- 46A, 46B: Leiter
- 48A, 48B: Ausnehmung
- 50: Stecker
- 52: Fixelement
- 54: Zufuhrschiene
- 56: Schraube
- 58: Isolierplatte
- 59A, 59B: Kontaktstelle
- 60: Detektorelement
- 61: Verbindungselement
- 62: Abstandssensor
- 64: Drucksensor

- S: Setzeinrichtung
- D: Druckluft

## Patentansprüche

1. Setzeinrichtung (10) zur Befestigung eines Elements (22) an einem Werkstück (36) mit einer mit dem Element (22) in mechanischem Kontakt bringbaren Führungseinrichtung (28), die einem axialen Hohlraum (26) zum Führen des Elements (22) aufweist, und mit einem axial bewegbaren Stempel (24) zum Bewegen des Elements (22) durch den Hohlraum (26) der Führungseinrichtung (28), wobei die Führungseinrichtung (28) zumindest ein erstes und ein zweites Führungselement (30A, 30B, 30C, 30C', 30C", 30D, 30D', 30D") aufweist, wobei die Führungselemente (30A, 30B, 30C, 30C', 30C", 30D, 30D', 30D") den axialen Hohlraum (26) begrenzen und mittels einer Vorspanneinrichtung durch eine auf zumindest eines, insbesondere alle der Führungselemente (30A, 30B, 30C, 30C', 30C", 30D, 30D', 30D") nach radial innen wirkende Vorspannkraft vorgespannt sind und wobei die Vorspanneinrichtung zumindest ein die Vorspannkraft erzeugendes elastisches Vorspannelement (42, 42A, 42B, 42C) umfasst, das zumindest teilweise aus einem Elastomer gefertigt ist,
wobei in Umfangsrichtung benachbarte Führungselemente (30A, 30B, 30C, 30C', 30C", 30D, 30D', 30D") durch zumindest eine Unterbrechung voneinander getrennt sind, insbesondere durch einen Schlitz (39),
wobei in der Unterbrechung jeweils zumindest ein Isolierelement (40) angeordnet ist,
wobei das Vorspannelement (42, 42A, 42B, 42C) und das Isolierelement einstückig ausgebildet sind,
wobei das Vorspannelement (42, 42A, 42B, 42C) ein in Umfangsrichtung geschlossenes, ringförmiges Element ist, das die Führungselemente (30A, 30B, 30C, 30C', 30C", 30D, 30D', 30D") an ihrer radialen Außenseite in Umfangsrichtung umgibt,
**dadurch gekennzeichnet, dass**
die Geometrie des Vorspannelements in Umfangsrichtung des Vorspannelements im Wesentlichen konstant ist.

2. Setzeinrichtung (10) nach Anspruch 1,
**dadurch gekennzeichnet, dass**
die Geometrie des Isolierelements in Längsrichtung des Isolierelements im Wesentlichen konstant ist.

3. Setzeinrichtung (10) nach zumindest einem der vorstehenden Ansprüche,
**dadurch gekennzeichnet, dass**
das Isolierelement (40) ein elektrisch isolierendes und/oder elastisches Material umfasst oder vollständig daraus gefertigt ist.

4. Setzeinrichtung (10) nach zumindest einem der vorstehenden Ansprüche,
**dadurch gekennzeichnet, dass**
das Vorspannelement (42, 42A, 42B, 42C) einen Anlageabschnitt aufweist, der an der Führungseinrichtung (28) angeordnet, insbesondere befestigt oder angeformt ist und der in zumindest einem Abschnitt der Führungseinrichtung (28) in radialer Richtung über einer Außenkontur der Führungselemente (30A, 30B, 30C, 30C', 30C", 30D, 30D', 30D") hinausragt, wobei der Anlageabschnitt zumindest einen Abstützpunkt zur radialen Abstützung der Führungsrichtung (28) bildet.

5. Setzeinrichtung (10) nach zumindest einem der vorstehenden Ansprüche,
**dadurch gekennzeichnet, dass**
das Vorspannelement (42, 42A, 42B, 42C) einen Anlageabschnitt aufweist, der an einer die Führungseinrichtung (28) zumindest teilweise aufnehmenden Komponente der Setzeinrichtung (10), insbesondere an einem Gehäuseabschnitt, angeordnet, insbesondere befestigt oder angeformt ist, wobei der Anlageabschnitt nach radial innen ragt und zumindest einen Abstützpunkt zur radialen Abstützung der Führungsrichtung (28) bildet.

6. Setzeinrichtung (10) nach zumindest einem der vorstehenden Ansprüche,
**dadurch gekennzeichnet, dass**
das Vorspannelement (42, 42A, 42B, 42C) ein separates Bauteil mit einem Anlageabschnitt ist, der in radialer Richtung zwischen der Führungseinrichtung (28) und einer die Führungseinrichtung (28) zumindest teilweise aufnehmenden Komponente der Setzeinrichtung (10), insbesondere einem Gehäuseabschnitt, angeordnet ist, wobei der Anlageabschnitt zumindest einen Abstützpunkt zur radialen Abstützung der Führungsrichtung (28) bildet.

7. Setzeinrichtung (10) nach zumindest einem der vorstehenden Ansprüche,
**dadurch gekennzeichnet, dass**
der Anlageabschnitt an einer radialen Außenseite eines der Führungselemente (30A, 30B, 30C, 30C', 30C", 30D, 30D', 30D") angeordnet ist.

8. Setzeinrichtung (10) nach zumindest einem der vorstehenden Ansprüche,
**dadurch gekennzeichnet, dass**
mehrere Anlageabschnitte vorgesehen sind, die in Umfangsrichtung der Führungseinrichtung (28) und/oder in Umfangsrichtung einer die Führungseinrichtung (28) zumindest teilweise aufnehmenden Komponente der Setzeinrichtung (10) verteilt, insbesondere symmetrisch verteilt angeordnet sind, insbesondere wobei die Anlageabschnitte separat voneinander ausgebildet sind.

9. Setzeinrichtung (10) nach zumindest einem der vorstehenden Ansprüche,
**dadurch gekennzeichnet, dass**
das Isolierelement (40) die Unterbrechung (39) im Wesentlichen vollständig ausfüllt.

10. Setzeinrichtung (10) nach zumindest einem der vorstehenden Ansprüche,
**dadurch gekennzeichnet, dass**
das Isolierelement (40) einen Elastomer umfasst.

11. Setzeinrichtung (10) nach zumindest einem der vorstehenden Ansprüche,
**dadurch gekennzeichnet, dass**
das Isolierelement (40) einen kreisförmigen, ovalen, trapezartigen oder keilförmigen Querschnitt aufweist.

12. Setzeinrichtung (10) nach zumindest einem der vorstehenden Ansprüche,
**dadurch gekennzeichnet, dass**
das Vorspannelement (42, 42A, 42B, 42C) und/oder das Isolierelement (40) einen vulkanisierten elastomeren Kunststoff umfassen.

13. Setzeinrichtung (10) nach zumindest einem der vorstehenden Ansprüche,
**dadurch gekennzeichnet, dass**
das Vorspannelement (42, 42A, 42B, 42C) und/oder das Isolierelement (40) zumindest teilweise an die Führungseinrichtung (28), insbesondere an zumindest eines der Führungselemente (30A, 30B, 30C, 30C', 30C", 30D, 30D', 30D") angeformt sind.

## Claims

1. A setting device (10) for fastening an element (22) to a workpiece (36), the setting device (10) comprising a guide device (28), which can be brought into mechanical contact with the element (22) and which has an axial hollow space (26) for guiding the element (22), and an axially movable ram (24) for moving the element (22) through the hollow space (26) of the guide device (28), wherein the guide device (28) has at least one first and one second guide element (30A, 30B, 30C, 30C', 30C", 30D, 30D', 30D"), wherein the guide elements (30A, 30B, 30C, 30C', 30C", 30D, 30D', 30D") bound the axial hollow space (26) and are preloaded by means of a preloading device by a preloading force acting radially inwardly on at least one guide element, in particular all of the guide elements (30A, 30B, 30C, 30C', 30C", 30D, 30D', 30D"), and wherein the preloading device comprises at least one elastic preloading element (42, 42A, 42B, 42C) which generates the preloading force and which is at least partly produced from an elastomer, wherein guide elements (30A, 30B, 30C, 30C', 30C", 30D, 30D', 30D") which are adjacent in the peripheral direction are separated from one another by at least one interval, in particular by a slit (39),
wherein a respective at least one insulation element (40) is arranged in the interval,
wherein the preloading element (42, 42A, 42B, 42C) and the insulation element are formed in one piece,
wherein the preloading element (42, 42A, 42B, 42C) is an annular element which is closed in the peripheral direction and which surrounds the guide elements (30A, 30B, 30C, 30C', 30C", 30D, 30D', 30D") at their radial outer side in the peripheral direction,
**characterized in that**
the geometry of the preloading element is substantially constant in the peripheral direction of the preloading element.

2. A setting device (10) according to claim 1,
**characterized in that**
the geometry of the insulation element is substantially constant in the longitudinal direction of the insulation element.

3. A setting device (10) according to at least one of the preceding claims,
**characterized in that**
the insulation element (40) comprises or is completely produced from an electrically insulating and/or elastic material.

4. A setting device (10) according to at least one of the preceding claims,
**characterized in that**
the preloading element (42, 42A, 42B, 42C) has a contact section which is arranged at, in particular fastened or molded to, the guide device (28) and which projects in at least one section of the guide device (28) in the radial direction beyond an outer contour of the guide elements (30A, 30B, 30C, 30C', 30C", 30D, 30D', 30D"), with the contact section forming at least one support point for the radial support of the guide device (28).

5. A setting device (10) according to at least one of the preceding claims,
**characterized in that**
the preloading element (42, 42A, 42B, 42C) has a contact section which is arranged at, in particular fastened or molded to, a component of the setting device (10) at least partly receiving the guide device (28), in particular at or to a housing section, with the contact section projecting radially inwardly and forming at least one support point for the radial support of the guide device (28).

6. A setting device (10) according to at least one of the preceding claims,
**characterized in that**
the preloading element (42, 42A, 42B, 42C) is a separate component having a contact section which is arranged in the radial direction between the guide device (28) and a component of the setting device (10) at least partly receiving the guide device (28), in particular a housing section, with the contact section forming at least one support point for the radial support of the guide device (28).

7. A setting device (10) according to at least one of the preceding claims,
**characterized in that**
the contact section is arranged at a radial outer side of one of the guide elements (30A, 30B, 30C, 30C', 30C", 30D, 30D', 30D").

8. A setting device (10) according to at least one of the preceding claims,
**characterized in that**
a plurality of contact sections are provided which are arranged distributed, in particular symmetrically distributed, in the peripheral direction of the guide device (28) and/or in the peripheral direction of a component of the setting device (10) at least partly receiving the guide device (28), in particular with the contact sections being formed separately from one another.

9. A setting device (10) according to at least one of the preceding claims,
**characterized in that**
the insulation element (40) substantially completely fills the interval (39).

10. A setting device (10) according to at least one of the preceding claims,
**characterized in that**
the insulation element (40) comprises an elastomer.

11. A setting device (10) according to at least one of the preceding claims,
**characterized in that**
the insulation element (40) has a circular, oval, trapezoid or wedge-shaped cross-section.

12. A setting device (10) according to at least one of the preceding claims,
**characterized in that**
the preloading element (42, 42A, 42B, 42C) and/or the insulation element (40) comprises/comprise a vulcanized elastomer plastic.

13. A setting device (10) according to at least one of the preceding claims,
**characterized in that**
the preloading element (42, 42A, 42B, 42C) and/or the insulation element (40) is/are at least partly molded to the guide device (28), in particular to at least one of the guide elements (30A, 30B, 30C, 30C', 30C", 30D, 30D', 30D").

## Revendications

1. Dispositif de pose (10) pour fixer un élément (22) sur une pièce à œuvrer (36), comprenant un dispositif de guidage (28) qui peut être mis en contact mécanique avec l'élément (22) et qui présente une cavité axiale (26) pour guider l'élément (22), et comprenant un poinçon (24) mobile axialement pour déplacer l'élément (22) à travers la cavité (26) du dispositif de guidage (28), le dispositif de guidage (28) présentant au moins un premier et un deuxième élément de guidage (30A, 30B, 30C, 30C', 30C", 30D, 30D', 30D"), les éléments de guidage (30A, 30B, 30C, 30C', 30C", 30D, 30D', 30D") délimitant la cavité axiale (26) et étant précontraints au moyen d'un dispositif de précontrainte par une force de précontrainte agissant radialement vers l'intérieur sur au moins l'un des éléments de guidage, en particulier sur tous les éléments de guidage (30A, 30B, 30C, 30C', 30C", 30D, 30D', 30D"), et le dispositif de précontrainte comprenant au moins un élément de précontrainte élastique (42, 42A, 42B, 42C) qui génère la force de précontrainte et qui est fabriqué au moins partiellement en un élastomère,
dans lequel
des éléments de guidage (30A, 30B, 30C, 30C', 30C", 30D, 30D', 30D") voisins dans la direction circonférentielle sont séparés les uns des autres par au moins une interruption, en particulier par une fente (39),
au moins un élément isolant (40) respectif est disposé dans l'interruption, l'élément de précontrainte (42, 42A, 42B, 42C) et l'élément isolant sont réalisés d'une seule pièce,
l'élément de précontrainte (42, 42A, 42B, 42C) est un élément annulaire fermé dans la direction circonférentielle, qui entoure les éléments de guidage (30A, 30B, 30C, 30C', 30C", 30D, 30D', 30D") sur leur face extérieure radiale dans la direction circonférentielle,
**caractérisé en ce que**
la géométrie de l'élément de précontrainte est sensiblement constante dans la direction circonférentielle de l'élément de précontrainte.

2. Dispositif de pose (10) selon la revendication 1,
**caractérisé en ce que**
la géométrie de l'élément isolant est sensiblement constante dans la direction longitudinale de l'élément isolant.

3. Dispositif de pose (10) selon l'une au moins des revendications précédentes,
**caractérisé en ce que**
l'élément isolant (40) comprend un matériau électriquement isolant et/ou élastique ou est entièrement fabriqué à partir de celui-ci.

4. Dispositif de pose (10) selon l'une au moins des revendications précédentes,
**caractérisé en ce que**
l'élément de précontrainte (42, 42A, 42B, 42C) présente une portion d'appui qui est disposée, en particulier fixée ou moulée, sur le dispositif de guidage (28) et qui, dans au moins une portion du dispositif de guidage (28), dépasse en direction radiale au-delà d'un contour extérieur des éléments de guidage (30A, 30B, 30C, 30C', 30C", 30D, 30D', 30D"), la portion d'appui formant au moins un point de support pour le support radial du dispositif de guidage (28).

5. Dispositif de pose (10) selon l'une au moins des revendications précédentes,
**caractérisé en ce que**
l'élément de précontrainte (42, 42A, 42B, 42C) présente une portion d'appui qui est disposée, en particulier fixée ou moulée, sur un composant du dispositif de pose (10) recevant au moins partiellement le dispositif de guidage (28), en particulier sur une portion de boîtier, la portion d'appui faisant saillie radialement vers l'intérieur et formant au moins un point de support pour le support radial du dispositif de guidage (28).

6. Dispositif de pose (10) selon l'une au moins des revendications précédentes,
**caractérisé en ce que**
l'élément de précontrainte (42, 42A, 42B, 42C) est un composant séparé présentant une portion d'appui qui est disposée dans la direction radiale entre le dispositif de guidage (28) et un composant du dispositif de pose (10) recevant au moins partiellement le dispositif de guidage (28), en particulier une portion de boîtier, la portion d'appui formant au moins un point de support pour le support radial du dispositif de guidage (28).

7. Dispositif de pose (10) selon l'une au moins des revendications précédentes,
**caractérisé en ce que**
la portion d'appui est disposée sur une face extérieure radiale de l'un des éléments de guidage (30A, 30B, 30C, 30C', 30C", 30D, 30D', 30D").

8. Dispositif de pose (10) selon l'une au moins des revendications précédentes,
**caractérisé en ce que**
**il** est prévu plusieurs portions d'appui qui sont réparties, en particulier réparties symétriquement, dans la direction circonférentielle du dispositif de guidage (28) et/ou dans la direction circonférentielle d'un composant du dispositif de pose (10) recevant au moins partiellement le dispositif de guidage (28), en particulier les portions d'appui étant réalisées séparément les unes des autres.

9. Dispositif de pose (10) selon l'une au moins des revendications précédentes,
**caractérisé en ce que**
l'élément isolant (40) remplit sensiblement entièrement l'interruption (39).

10. Dispositif de pose (10) selon l'une au moins des revendications précédentes,
**caractérisé en ce que**
l'élément isolant (40) comprend un élastomère.

11. Dispositif de pose (10) selon l'une au moins des revendications précédentes,
**caractérisé en ce que**
l'élément isolant (40) présente une section transversale circulaire, ovale, trapézoïdale ou en forme de coin.

12. Dispositif de pose (10) selon l'une au moins des revendications précédentes,
**caractérisé en ce que**
l'élément de précontrainte (42, 42A, 42B, 42C) et/ou l'élément isolant (40) présente(nt) une matière plastique élastomère vulcanisée.

13. Dispositif de pose (10) selon l'une au moins des revendications précédentes,
**caractérisé en ce que**
l'élément de précontrainte (42, 42A, 42B, 42C) et/ou l'élément isolant (40) sont moulés au moins partiellement sur le dispositif de guidage (28), en particulier sur l'un au moins des éléments de guidage (30A, 30B, 30C, 30C', 30C", 30D, 30D', 30D").
